(19) **Europäisches Patentamt / European Patent Office / Office européen des brevets**

(11) **EP 2 604 716 B1**

(12) **EUROPEAN PATENT SPECIFICATION**

(45) Date of publication and mention of the grant of the patent:
**05.10.2016 Bulletin 2016/40**

(51) Int Cl.:
*C22C 38/00* (2006.01)   *C22C 38/02* (2006.01)
*C22C 38/04* (2006.01)   *C22C 38/06* (2006.01)
*C22C 38/12* (2006.01)   *C22C 38/14* (2006.01)
*C21D 8/02* (2006.01)    *C21D 9/46* (2006.01)
*B32B 15/01* (2006.01)

(21) Application number: **11816508.3**

(22) Date of filing: **09.08.2011**

(86) International application number:
**PCT/JP2011/068494**

(87) International publication number:
**WO 2012/020847 (16.02.2012 Gazette 2012/07)**

(54) **HIGH-STRENGTH HOT-ROLLED STEEL SHEET HAVING EXCELLENT WORKABILITY, AND A METHOD FOR PRODUCING SAME**

HOCHFESTES HEISSGEWALZTES STAHLBLECH VON HERVORRAGENDER BEARBEITBARKEIT SOWIE VERFAHREN ZU SEINER HERSTELLUNG

TÔLE D'ACIER LAMINÉE À CHAUD À HAUTE RÉSISTANCE AYANT UNE EXCELLENTE APTITUDE AU FAÇONNAGE, ET SON PROCÉDÉ DE FABRICATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **02.08.2011   JP 2011168870**
**10.08.2010   JP 2010179246**

(43) Date of publication of application:
**19.06.2013 Bulletin 2013/25**

(73) Proprietor: **JFE Steel Corporation**
**Tokyo 100-0011 (JP)**

(72) Inventors:
 • **NAKAJIMA, Katsumi**
  **Tokyo 100-0011 (JP)**
 • **MEGA, Tetsuya**
  **Tokyo 100-0011 (JP)**
 • **MIZUNO, Reiko**
  **Tokyo 100-0011 (JP)**
 • **MORIYASU, Noriaki**
  **Tokyo 100-0011 (JP)**

(74) Representative: **Hoffmann Eitle**
**Patent- und Rechtsanwälte PartmbB**
**Arabellastraße 30**
**81925 München (DE)**

(56) References cited:
**EP-A1- 2 180 070          EP-A2- 0 288 054**
**WO-A1-2009/028515     WO-A1-2009/072753**
**JP-A- 4 276 024            JP-A- 7 011 382**
**JP-A- 8 176 723            JP-A- H1 143 725**
**JP-A- S5 842 726          JP-A- 10 030 149**
**JP-A- H06 279 853        JP-A- H06 299 236**
**JP-A- H06 330 163        JP-A- H11 343 535**
**JP-A- 2000 290 749       JP-A- 2001 164 322**
**JP-A- 2002 161 339       JP-A- 2002 180 193**
**JP-A- 2002 539 330       JP-A- 2010 189 738**

**Description**

[Technical Field]

The present invention relates generally to high-strength hot-rolled steel sheets used for automotive components, including structural components, such as members and frames, and chassis components, such as suspensions, of car bodies, and particularly to high-strength hot-rolled steel sheets having excellent formability with tensile strengths, TS, of 490 to less than 590 MPa and methods for manufacturing such high-strength hot-rolled steel sheets.

[Background Art]

Recently, high-strength steel sheets have been extensively used for reduced car body weight. In particular, cost-effective high-strength hot-rolled steel sheets have been increasingly used for members that do not require excellent surface quality, including structural components and chassis components of car bodies.

Conventionally available strengthening techniques for high-strength hot-rolled steel sheets with a TS of 490 to 590 MPa include a) solid-solution strengthening by dissolving an element such as Si in ferrite phase; b) precipitation strengthening by forming a carbonitride of an element such as Ti, Nb, or V in ferrite phase; c) structure strengthening by forming a phase such as martensite phase or bainite phase in ferrite phase; and combinations thereof. Various high-strength hot-rolled steel sheets have been developed depending on the required properties. Examples of inexpensive, general-purpose steel sheets include solid-solution-strengthened or precipitation-strengthened hot-rolled steel sheets (HSLA). Examples of steel sheets requiring ductility include multiple phase steel sheets (DP steel sheets), which are structure-strengthened steel sheets composed of ferrite and martensite phases. Examples of steel sheets requiring stretch flange formability include steel sheets structure-strengthened with bainite phase.

As an example of a high-strength hot-rolled steel sheet having excellent stretch flange formability, patent document 1 proposes a high-strength hot-rolled steel sheet having excellent formability, including ductility, shape fixability, and stretch flange formability, with a TS of 540 to 590 MPa. The steel sheet has a composition containing, by mass, 0.010% to 0.10% of C, 0.50% to 1.50% of Si, 0.50% to 2.00% of Mn, 0.01% to 0.15% of P, 0.005% or less of S, 0.001% to 0.005% of N, and at least one of 0.005% to 0.03% of Ti, 0.005% to 0.03% of V, and 0.01% to 0.06% of Nb, the balance being Fe and incidental impurities. The steel sheet has a microstructure containing 80% to 97% by volume of ferrite phase having an average grain size of 10 $\mu$m or less, the balance being bainite phase. Patent document 2 proposes a method for manufacturing a high-strength hot-rolled steel sheet having excellent stretch flange formability after working with a TS of 490 MPa or more. The method uses a steel slab containing, by mass, 0.010% to 0.15% of C, 0.1% to 1.5% of Si, 0.5% to 2.0% of Mn, 0.06% or less of P, 0.005% or less of S, 0.10% or less of Al, and at least one of 0.005% to 0.1% of Ti, 0.005% to 0.1% of Nb, 0.005% to 0.2% of V, and 0.005% to 0.2% of W, the balance being Fe and incidental impurities. The steel slab is heated to 1,150°C to 1,300°C, is then hot-rolled at a finish temperature of 800°C to 1,000°C, and is cooled to a cooling stop temperature of 525°C to 625°C at an average cooling rate of 30°C/s or higher. After cooling is stopped (air cooling is allowed) for 3 to 10 seconds, the steel sheet is cooled in a manner that causes nucleate boiling and is coiled at 400°C to 550°C.

Patent document 3 discloses a method for manufacturing a high strength steel sheet that has strength of 490 MPa or higher, a hole expanding ratio after 10% working of 80% or higher, is excellent in terms of stretch-flangeability, and is stable in terms of localized variation of material characteristics within a coil. The method comprises a step of heating a slab to a temperature in the range of 1150 to 1300°C; a step of hot rolling the slab with a finishing rolling temperature being in the range of 800 to 1000°C; a step of cooling the steel sheet at a mean cooling rate of 30°C/s or higher to a cooling termination temperature in the range of 525 to 625°C; a step of suspending cooling for a time period in the range of 3 to 10 seconds; a step of cooling the steel sheet in such a manner that cooling of the steel sheet is nucleate boiling; and a step of coiling the steel sheet at a temperature in the range of 400 to 550°C, wherein the slab contains the following elements at the following content ratios by weight percent: C: 0.05 to 0.15%, Si: 0.1 to 1.5%, Mn: 0.5 to 2.0%, P: 0.06% or lower, S: 0.005% or lower, Al: 0.10% or lower; one or more of the following elements Ti: 0.005 to 0.1 %; Nb: 0.005 to 0.1 %; V: 0.005 to 0.2%; W: 0.005 to 0.2%; and Fe and unavoidable impurities as the balance.

[Citation List]

[Patent Document]

[Patent document 1] Japanese Unexamined Patent Application Publication No. 11-117039
[Patent document 2] Japanese Unexamined Patent Application Publication No. 2009-52065

[Patent document 3] EP 2 180 070 A1

[Summary of Invention]

[Technical Problem]

However, the hole expanding ratio, λ, which is a measure of the stretch flange formability of steel sheets, needs to be 125% or more so that they can be formed into various structural components and chassis components of car bodies without problems; with the high-strength hot-rolled steel sheet disclosed in patent document 1, it is difficult to achieve a λ of 125% or more. Also, the high-strength hot-rolled steel sheet manufactured by the method disclosed in patent document 2 does not necessarily provide a λ of 125% or more.

An object of the present invention is to provide a high-strength hot-rolled steel sheet having excellent formability that reliably provides a λ of 125% or more and a TS of 490 to less than 590 MPa, and also to provide a method for manufacturing such a high-strength hot-rolled steel sheet.

[Solution to Problem]

After a considerable study in an effort to achieve the above object, the inventors have made the following findings.

i) A λ of 125% or more and a TS of 490 to less than 590 MPa can be reliably achieved by optimizing the composition so as to form a microstructure consisting of ferrite, bainite and other phases in which the area fraction of ferrite phase, which is composed of polygonal ferrite phase and acicular ferrite phase, in the entire structure is 85% or more, the area fraction of bainite phase in the entire structure is 10% or less, the area fraction of phases other than the ferrite and bainite phases in the entire structure is 5% or less, and the area fraction of acicular ferrite phase in the entire ferrite phase is 30% to less than 80%.

ii) Such a microstructure can be formed by primarily cooling a hot-rolled steel sheet to a cooling stop temperature of 500°C to 625°C at an average cooling rate of 100°C/s to 230°C/s, allowing the steel sheet to cool in air, secondarily cooling the steel sheet at an average cooling rate of 100°C/s or higher, and coiling the steel sheet at a coiling temperature of 400°C to 550°C.

The present invention has been made based on these findings, and provides a high-strength hot-rolled steel sheet having excellent formability with a composition consisting of, by mass, 0.04% to 0.1% of C, 0.3% to 1.3% of Si, 0.8% to 1.8% of Mn, 0.03% or less of P, 0.005% or less of S, 0.005% or less of N, 0.005% to 0.1% of Al, and at least one element selected from 0.002% to 0.029% of Ti, 0.002% to 0.029% of V, and 0.002% to 0.019% of Nb, and optionally 0.0002% to 0.005% of B and at least one of 0.0005% to 0.005% of Ca and 0.0005% to 0.03% of REM, the balance being Fe and incidental impurities. The steel sheet has a microstructure consisting of ferrite, bainite and other phases in which the area fraction of ferrite phase, which is composed of polygonal ferrite phase and acicular ferrite phase, in the entire structure is 85% or more, the area fraction of bainite phase in the entire structure is 10% or less, the area fraction of phases other than the ferrite and bainite phases in the entire structure is 5% or less, and the area fraction of acicular ferrite phase in the entire ferrite phase is 30% to less than 80%, a tensile strength, TS, of 490 to less than 590 MPa, and a hole expanding ratio, λ, of 125% or more measured in accordance with JFST 1001.

The high-strength hot-rolled steel sheet of the present invention is manufactured by a method including hot-rolling a steel slab having the above composition at a finish temperature ranging from an $Ar_3$ transformation point to ($Ar_3$ transformation point + 100)°C, primarily cooling the hot-rolled steel sheet to a cooling stop temperature of 500°C to 625°C at an average cooling rate of 100°C/s to 230°C/s, allowing the steel sheet to cool in air for 0.5 second or more, secondarily cooling the steel sheet at an average cooling rate of 100°C/s or higher, and coiling the steel sheet at a coiling temperature of 400°C to 550°C.

Preferably, the difference between the cooling stop temperature in the primary cooling and the coiling temperature is 100°C or lower.

[Advantageous Effects of Invention]

The present invention allows for the manufacture of a high-strength hot-rolled steel sheet having excellent formability that reliably provides a λ of 125% or more with a TS of 490 to less than 590 MPa. The high-strength hot-rolled steel sheet of the present invention is suitable for reduced weight of structural components, such as members and frames, and chassis components, such as suspensions, of car bodies.

[Description of Embodiments]

The present invention will now be specifically described, where the "%" sign concerning composition refers to "% by mass" unless otherwise indicated.

1) Composition

C: 0.04% to 0.1%

C is an element effective in ensuring the necessary strength. A C content of 0.04% or more is needed to provide a TS of 490 MPa or more. A C content above 0.1%, however, decreases the total elongation, El, and λ. Thus, the C content is 0.04% to 0.1%, more preferably 0.05% to 0.09%.

Si: 0.3% to 1.3%

Si is an element necessary for increasing the strength by solid-solution strengthening. A Si content below 0.3% requires a larger amount of expensive alloying element to be added to provide a TS of 490 MPa or more. A Si content above 1.3%, on the other hand, significantly degrades the surface quality. Thus, the Si content is 0.3% to 1.3%, more preferably 0.4% to 1.0%.

Mn: 0.8% to 1.8%

Mn is an element effective for solid-solution strengthening and formation of bainite phase. A Mn content of 0.8% or more is needed to provide a TS of 490 MPa or more. A Mn content above 1.8%, however, decreases the weldability. Thus, the Mn content is 0.8% to 1.8%, more preferably 0.8% to 1.3%.

P: 0.03% or less

A P content above 0.03% results in decreased El and λ due to segregation. Thus, the P content is 0.03% or less.

S: 0.005% or less

S forms sulfides of Mn and Ti to decrease El and λ and also to decrease the contents of Mn and Ti, which are effective elements for strengthening, although a S content of up to 0.005% is acceptable. Thus, the S content is 0.005% or less, more preferably 0.003% or less.

N: 0.005% or less

A high N content above 0.005% is detrimental because a large amount of nitride forms during the manufacturing process and decreases the hot ductility. Thus, the N content is 0.005% or less.

Al: 0.005% to 0.1%

A1 is an element important as a deoxidizer for the steel, and to this end, an Al content of 0.005% or more is needed. An Al content above 0.1%, however, makes it difficult to cast the steel and leaves a large amount of inclusions in the steel, thus degrading the material quality and the surface quality. Thus, the Al content is 0.005% to 0.1%.

At least one element selected from 0.002% to 0.029% of Ti, 0.002% to 0.029% of V, and 0.002% to 0.019% of Nb

Ti, V, and Nb are elements that contribute to strengthening by combining in part with C and N to form fine carbides and nitrides. To produce this effect, at least one element selected from Ti, V, and Nb needs to be contained, and the content of the element needs to be 0.002% or more. A Ti or V content of 0.03% or more or a Nb content of 0.02% or more, however, considerably decreases El and λ while increasing the strength, which does not result in a desired balance between strength and formability. Thus, the Ti content is 0.002% to 0.029%, the V content is 0.002% to 0.029%, and the Nb content is 0.002% to 0.019%.

The balance is Fe and incidental impurities, although at least one of 0.0005% to 0.005% of Ca and 0.0005% to 0.03% of REM and 0.0002% to 0.005% of B are preferably contained separately or simultaneously for the following reasons.

Ca: 0.0005% to 0.005%, REM: 0.0005% to 0.03%

Ca and REM are elements effective for morphology control of inclusions and contribute to increased El and $\lambda$. To produce this effect, a Ca or REM content of 0.0005% or more is preferred. A Ca content above 0.005% or a REM content above 0.03%, however, increases the amount of inclusions in the steel and therefore degrades the material quality thereof. Thus, the Ca content is 0.0005% to 0.005%, and the REM content is 0.0005% to 0.03%.

B: 0.0002% to 0.005%

B is an element advantageous for formation of acicular ferrite, and to this end, 0.0002% or more of B needs to be added. A B content above 0.005%, however, produces no greater effect, and the effect is not commensurate with cost. Thus, the B content is 0.0002% to 0.005%.

2) Microstructure

The high-strength hot-rolled steel sheet of the present invention contains a ferrite phase composed of polygonal ferrite phase and acicular ferrite phase and having bainite phase dispersed therein and has a microstructure consisting of ferrite, bainite and other phases in which the area fraction of the ferrite phase in the entire structure is 85% or more, the area fraction of the bainite phase in the entire structure is 10% or less, the area fraction of phases other than the ferrite and bainite phases in the entire structure is 5% or less, and the area fraction of the acicular ferrite phase in the entire ferrite phase is 30% to less than 80%. Controlling the area fractions of the bainite and ferrite phases in this manner provides high El while ensuring a TS of 490 to less than 590 MPa. In addition, controlling the area fraction of the acicular ferrite phase in this manner reduces the difference in hardness between the ferrite phase and the bainite phase, thereby providing a $\lambda$ of 125% or more. Preferably, the area fraction of the acicular ferrite phase is 30% to 79%. The presence of phases other than the ferrite and bainite phases, such as pearlite phase, retained austenite phase, and martensite phase, does not impair the advantages of the present invention as long as the area fraction thereof in the entire structure is 5% or less. Thus, the area fraction of phases other than the ferrite and bainite phases (the sum of the area fractions of other phases) is 5% or less.

The area fractions of the ferrite phase, the bainite phase, and the other phases are determined by removing a test specimen for scanning electron microscopy (SEM), polishing and then corroding with nital a cross-section cut across the thickness and parallel to the rolling direction, capturing 10 SEM images with different fields of view in the center of the thickness at 1,00OX and 3,000X magnifications, extracting the ferrite phase, the bainite phase, and the other phases by image processing, measuring the areas of the ferrite phase, the bainite phase, the other phases, and the examination field of view by image analysis processing, and calculating the respective area fractions by (area of phase) / (area of examination field of view) x 100 (%). The area fraction of the acicular ferrite phase in the entire ferrite phase is determined by measuring the area of the acicular ferrite phase in the same manner and calculating the area fraction thereof by (area of acicular ferrite phase) / (area of examination field of view - area of bainite phase - area of other phases) x 100 (%). The ferrite phase is a portion that appears gray in a 1,000X SEM image, and the second phases are portions, excluding grain boundaries, that appear white. Of the second phases, grains having an internal structure in which carbides, for example, are observed in a 3,000X SEM image are defined as the bainite phase. It should be noted, however, that a portion having a lamellar structure with a pitch of 0.05 $\mu$m or more in the internal structure is defined as pearlite and is excluded from the bainite phase. Unlike polygonal ferrite phase, which is equiaxial, the acicular ferrite phase is observed as a phase composed of elongated ferrite grains, and a phase composed of ferrite grains satisfying major axis / minor axis $\geq$ 1.5 is defined as the acicular ferrite phase, where the major axis is the longest diameter of each ferrite grain, and the minor axis is the shortest diameter of each ferrite grain in a direction perpendicular thereto.

Whereas the area fraction of the acicular ferrite phase may be directly determined, as described above, it can also be determined by subtracting the area fraction of the polygonal ferrite phase from the area fraction of the ferrite phase. In this case, the polygonal ferrite phase is defined as a phase composed of ferrite grains satisfying major axis / minor axis < 1.5.

3) Manufacturing Conditions

Finish Temperature in Hot Rolling: $Ar_3$ Transformation Point to ($Ar_3$ Transformation Point + 100)°C

A finish temperature below the $Ar_3$ transformation point results in formation of coarse grains and mixed grains in the surface layer of the steel sheet, thus decreasing El and $\lambda$. A finish temperature above ($Ar_3$ transformation point + 100)°C coarsens crystal grains, thus providing no desired properties. Thus, the finish temperature is the $Ar_3$ transformation point to ($Ar_3$ transformation point + 100)°C or higher.

The Ar$_3$ transformation point is the transformation temperature determined from a point of change in a thermal expansion curve obtained by a working Formaster test carried out at a cooling rate of 10°C/s.

Primary Cooling Conditions after Hot Rolling: Average Cooling Rate of 100°C/s to 230°C/s, Cooling Stop Temperature of 500°C to 625°C

An average cooling rate below 100°C/s during primary cooling after hot rolling does not allow the desired amount of acicular ferrite phase to be formed because ferrite transformation starts in a high-temperature range. Again, an average cooling rate above 230°C/s during primary cooling does not allow the desired amount of acicular ferrite phase to be formed. Thus, the average cooling rate during primary cooling is 100°C/s to 230°C/s. Primary cooling can be performed in any manner, such as using a known water cooling system based on laminar cooling.
Primary cooling needs to be stopped at a cooling stop temperature of 500°C to 625°C because a cooling stop temperature below 500°C results in formation of an excessive amount of bainite phase, and a.cooling stop temperature above 625°C does not allow the desired amount of acicular ferrite phase to be formed.
More preferably, the cooling stop temperature is 500°C to 550°C. A cooling stop temperature above 550°C tends to coarsen the acicular ferrite phase and therefore the desired λ might not be obtained.

Air Cooling Time after Primary Cooling: 0.5 Second or More

The air cooling time after primary cooling is crucial in forming the desired microstructure. In particular, after primary cooling, cooling is stopped, and air cooling is allowed in order to form the proper amount of bainite phase. An air cooling time below 0.5 second does not allow the desired amount of bainite phase to be formed because an insufficient amount of carbon concentrates in austenite phase. Thus, the air cooling time after primary cooling is 0.5 second or more. Preferably, the air cooling time is 5 seconds or less.

Secondary Cooling Conditions after Air Cooling: Average Cooling Rate of 100°C/s or Higher

After air cooling, secondary cooling needs to be performed to the coiling temperature at an average cooling rate of 100°C/s or higher so that the amount of ferrite phase formed, which has been adjusted during air cooling, does not vary. Secondary cooling can be performed in any manner, such as using a known water cooling system based on laminar cooling.

Coiling Temperature: 400°C to 550°C

Coiling needs to be performed at a coiling temperature of 400°C to 550°C to transform the austenite phase maintained after secondary cooling into bainite phase. A coiling temperature below 400°C results in formation of martensite phase, which is harder than bainite phase, whereas a coiling temperature above 550°C results in formation of pearlite phase, which decreases El and λ.
For higher stretch flange formability, the difference between the cooling stop temperature in primary cooling and the coiling temperature is preferably 100°C or lower. This reduces the difference in hardness between the main phase, i.e., the ferrite phase, and the second phases, such as the bainite phase, which are harder, thus improving λ.
The remaining manufacturing conditions may be as usual. For example, a steel having the desired composition is produced by melting in a converter or electric furnace and then secondary refining in a vacuum degassing furnace. The subsequent casting step is preferably performed by continuous casting for high productivity and quality. The slabs formed by casting may be normal slabs having a thickness of 200 to 300 mm or thin slabs having a thickness of about 30 mm. Thin slabs do not require rough rolling. After casting, the slabs as cast may be subjected to hot direct rolling or to hot rolling after reheating in a heating furnace.
The high-strength hot-rolled steel sheet of the present invention can become a plated steel sheet such as an electrogalvanized steel sheet, a hot-dip galvanized steel sheet, or a galvannealed steel sheet.

[EXAMPLES]

Steel Slabs Nos. A to I, which had the compositions and Ar$_3$ transformation points shown in Table 1, were heated to 1,250°C and were hot-rolled to a thickness of 3 mm under the conditions shown in Table 2 to produce Hot-Rolled Steel Sheets Nos. 1 to 13. The Ar$_3$ transformation points in Table 1 were determined in the manner described above.
The area fractions of the ferrite and bainite phases in the entire structure and the area fraction of the acicular ferrite phase in the entire ferrite phase were determined in the manner described above. In addition, JIS No. 5 tensile test specimens (perpendicular to the rolling direction) and hole expanding test specimens (130 mm square) were removed and used to determine TS, El, and λ in the following manner.

TS, El: The TS and El of three tensile test specimens were measured by a tensile test at a strain rate of 10 mm/min in accordance with JIS Z 2241 and were averaged.

λ: A hole expanding test was performed on three test specimens by forming a hole with a diameter of 10 mm in the center of the test specimens and forcing a 60° conical punch up into the hole at the opposite side from the burr in accordance with the Japan Iron and Steel Federation Standard JFST 1001 to measure the hole diameter, d mm, when a crack penetrated the test specimens across the thickness thereof. The values of λ of the three test specimens were calculated by the following equation and were averaged to evaluate a λ:

$$\lambda\ (\%)\ =\ [(d-10)/10]\ \times\ 100$$

The results are shown in Table 3. The results demonstrate that the Invention Examples had a TS of 490 to less than 590 MPa and also had excellent formability with an El of 29% or more and a λ of 125% or more.

[Table 1]

| Steel slab No. | % by mass | | | | | | | | | | | Ar₃ transformation point (°C) | Remarks |
| --- | --- | --- | --- | --- | --- | --- | --- | --- | --- | --- | --- | --- | --- |
| | C | Si | Mn | P | S | N | Al | Ti | Nb | V | Others | | |
| A | 0.050 | 0.39 | 1.36 | 0.007 | 0.0031 | 0.0049 | 0.051 | - | 0.002 | 0.019 | Ca:0.0033 | 851 | Within scope of invention |
| B | 0.072 | 0.66 | 1.16 | 0.010 | 0.0005 | 0.0019 | 0.019 | 0.016 | - | - | - | 843 | Within scope of invention |
| C | 0.090 | 0.81 | 1.22 | 0.021 | 0.0011 | 0.0038 | 0.044 | - | 0.007 | - | - | 836 | Within scope of invention |
| D | 0.077 | 0.69 | 1.15 | 0.014 | 0.0009 | 0.0022 | 0.032 | 0.029 | 0.002 | 0.002 | - | 844 | Within scope of invention |
| E | 0.041 | 0.42 | 0.92 | 0.028 | 0.0010 | 0.0047 | 0.063 | 0.003 | - | 0.029 | B:0.0011 | 849 | Within scope of invention |
| F | 0.055 | 0.52 | 0.83 | 0.018 | 0.0016 | 0.0015 | 0.021 | 0.004 | 0.019 | - | REM:0.0018 | 866 | Within scope of invention |
| G | 0.095 | 0.56 | 1.21 | 0.014 | 0.0018 | 0.0033 | 0.037 | 0.045 | - | 0.025 | - | 841 | Beyond scope of invention |
| H | 0.061 | 0.41 | 1.75 | 0.022 | 0.0011 | 0.0052 | 0.055 | 0.011 | 0.018 | - | - | 831 | Within scope of invention |
| I | 0.088 | 0.92 | 1.36 | 0.017 | 0.0014 | 0.0047 | 0.062 | - | 0.039 | - | - | 850 | Beyond scope of invention |

[Table 2]

| Hot-rolled steel sheet No. | Steel slab No. | Finish temperature (°C) | Primary cooling conditions | | Air cooling time (s) | Secondary cooling conditions | Coiling temperature Tc (°C) | (Ts-Tc) (°C) | Remarks |
|---|---|---|---|---|---|---|---|---|---|
| | | | Average cooling rate (°C/s) | Cooling stop temperature Ts (°C) | | Average cooling rate (°C/s) | | | |
| 1 | A | 865 | 60 | 615 | 2.2 | 125 | 505 | 110 | Reference example |
| 2 | B | 935 | 125 | 620 | 2.4 | 115 | 515 | 105 | Invention example |
| 3 | B | 885 | 110 | 500 | 4.4 | 185 | 450 | 50 | Invention example |
| 4 | C | 890 | <u>235</u> | 530 | <u>0.2</u> | 155 | 430 | 100 | Comparative example |
| 5 | C | 895 | 155 | 565 | 2.7 | 140 | 495 | 70 | Invention example |
| 6 | C | 925 | 145 | 610 | 5.9 | 205 | 425 | 185 | Invention example |
| 7 | D | 890 | <u>315</u> | 505 | 3.9 | 155 | 410 | 95 | Comparative example |
| 8 | E | 880 | 115 | <u>650</u> | 4.5 | 160 | 540 | 110 | Comparative example |
| 9 | F | 920 | 175 | 545 | 2.7 | 115 | <u>385</u> | 160 | Comparative example |
| 10 | <u>G</u> | 860 | 190 | <u>495</u> | 3.3 | 185 | 415 | 80 | Comparative example |
| 11 | H | 845 | 95 | 550 | <u>0.4</u> | 105 | <u>395</u> | 155 | Comparative example |
| 12 | I | <u>840</u> | 140 | 585 | 1.9 | 135 | 475 | 110 | Comparative example |
| 13 | B | 895 | 205 | 545 | 0.9 | 105 | 435 | 110 | Invention example |

EP 2 604 716 B1

9

[Table 3]

| Hot-rolled steel sheet No. | Area fraction of ferrite phase (%) | Area fraction of bainite phase (%) | Area fraction of other phases (%) | Area fraction of acicular ferrite phase in ferrite phase (%) | TS (MPa) | EI (%) | λ (%) | Remarks |
|---|---|---|---|---|---|---|---|---|
| 1 | 94 | 2 | 4 | 65 | 529 | 37.5 | 175 | Reference example |
| 2 | 91 | 8 | 1 | 52 | 505 | 39.5 | 195 | Invention example |
| 3 | 90 | 9 | 1 | 79 | 568 | 36.5 | 185 | Invention example |
| 4 | 96 | 3 | 1 | <u>92</u> | <u>630</u> | <u>28.0</u> | 130 | Comparative example |
| 5 | 93 | 7 | 0 | 77 | 550 | 38.5 | 185 | Invention example |
| 6 | 93 | 3 | 4 | 61 | 575 | 35.0 | 145 | Invention example |
| 7 | 92 | 3 | 5 | 99 | <u>651</u> | <u>26.0</u> | <u>105</u> | Comparative example |
| 8 | 90 | 9 | 1 | 28 | 498 | 29.0 | <u>120</u> | Comparative example |
| 9 | 88 | 3 | <u>9</u> | 55 | <u>645</u> | <u>27.5</u> | <u>100</u> | Comparative example |
| 10 | 97 | 2 | 1 | <u>96</u> | <u>660</u> | <u>24.0</u> | <u>105</u> | Comparative example |
| 11 | <u>24</u> | <u>71</u> | 5 | <u>97</u> | <u>685</u> | <u>23.5</u> | 90 | Comparative example |
| 12 | 97 | 1 | 2 | <u>98</u> | <u>635</u> | <u>23.0</u> | 125 | Comparative example |
| 13 | 96 | 3 | 1 | 76 | 544 | 37.5 | 185 | Invention example |

**Claims**

1. A high-strength hot-rolled steel sheet having excellent formability, with a composition consisting of, by mass, 0.04% to 0.1% of C, 0.3% to 1.3% of Si, 0.8% to 1.8% of Mn, 0.03% or less of P, 0.005% or less of S, 0.005% or less of N, 0.005% to 0.1% of A1, and at least one element selected from 0.002% to 0.029% of Ti, 0.002% to 0.029% of V, and 0.002% to 0.019% of Nb,
and optionally 0.0002% to 0.005% of B and at least one of 0.0005% to 0.005% of Ca and 0.0005% to 0.03% of REM, the balance being Fe and incidental impurities,
the steel sheet having
a microstructure consisting of ferrite, bainite and other phases, in which the area fraction of ferrite phase, which is composed of polygonal ferrite phase and acicular ferrite phase, in the entire structure is 85% or more, the area fraction of bainite phase in the entire structure is 10% or less, the area fraction of phases other than the ferrite and bainite phases in the entire structure is 5% or less, and the area fraction of acicular ferrite phase in the entire ferrite phase is 30% to less than 80%
a tensile strength, TS, of 490 to less than 590 MPa, and a hole expanding ratio, λ, of 125% or more measured in accordance with JFST 1001.

2. The high-strength hot-rolled steel sheet having excellent formability according to Claim 1, containing, by mass, at least one of 0.0005% to 0.005% of Ca and 0.0005% to 0.03% of REM.

3. The high-strength hot-rolled steel sheet having excellent formability according to Claim 1 or 2, containing, by mass, 0.0002% to 0.005% of B.

4. A method for manufacturing a high-strength hot-rolled steel sheet according to claims 1 to 3, having excellent formability, comprising hot-rolling a steel slab having the composition according to any one of Claims 1 to 3 at a finish temperature of an $Ar_3$ transformation point to ($Ar_3$ transformation point + 100)°C, primarily cooling the hot-rolled steel sheet to a cooling stop temperature of 500°C to 625°C at an average cooling rate of 100°C/s to 230°C/s, allowing the steel sheet to cool in air for 0.5 second or more, secondarily cooling the steel sheet at an average cooling rate of 100°C/s or higher, and coiling the steel sheet at a coiling temperature of 400°C to 550°C.

5. The method for manufacturing a high-strength hot-rolled steel sheet having excellent formability according to Claim 4, wherein the difference between the cooling stop temperature in the primary cooling and the coiling temperature is 100°C or lower.

**Patentansprüche**

1. Hochfestes warmgewalztes Stahlblech mit exzellenter Formbarkeit, mit einer Zusammensetzung bestehend aus, in Masse,
0,04% bis 0,1% C, 0,3% bis 1,3% Si, 0,8% bis 1,8% Mn, 0,03% oder weniger P, 0,005% oder weniger S, 0,005% oder weniger N, 0,005% bis 0,1% Al, und zumindest ein Element, ausgesucht aus 0,002% bis 0,029% Ti, 0,002% bis 0,029% V, und 0,002% bis 0,019% Nb,
und optional 0,0002% bis 0,005% B und zumindest eines aus 0,0005% bis 0,005% Ca und 0,0005% bis 0,03% REM, wobei der Rest aus Fe und unvermeidlichen Verunreinigungen besteht,
wobei das Stahlblech
ein Gefüge, bestehend aus Ferrit, Bainit und anderen Phasen, in welchem der Flächenanteil der Ferritphase, die aus polygonaler Ferritphase und nadelförmiger Ferritphase besteht, in dem gesamten Gefüge 85% oder mehr beträgt, der Flächenanteil der Bainitphase in dem gesamten Gefüge 10% oder weniger beträgt, der Flächenanteil der Phasen außer der Ferrit- und Bainitphase in dem gesamten Gefüge 5% oder weniger beträgt, und der Flächenanteil der nadelförmigen Ferritphase in der gesamten Ferritphase 30% bis weniger als 80% beträgt,
eine Zugfestigkeit, TS, von 490 bis weniger als 590 MPa, und
ein Lochaufweitungsverhältnis, $\lambda$, von 125% oder mehr, gemessen in Übereinstimmung mit JFST 1001, aufweist.

2. Hochfestes warmgewalztes Stahlblech mit exzellenter Formbarkeit gemäß Anspruch 1, beinhaltend, in Masse, zumindest eines aus 0,0005% bis 0,005% Ca und 0,0005% bis 0,03% REM.

3. Hochfestes warmgewalztes Stahlblech mit exzellenter Formbarkeit gemäß Anspruch 1 oder 2, beinhaltend, in Masse, 0,0002% bis 0,005% B.

4. Verfahren zur Herstellung eines hochfesten warmgewalzten Stahlblechs gemäß den Ansprüchen 1 bis 3, exzellente Formbarkeit aufweisend, umfassend das Warmwalzen einer Stahlbramme mit der Zusammensetzung gemäß einem der Ansprüche 1 bis 3 bei einer Endtemperatur vom $Ar_3$-Umwandlungspunkt bis ($Ar_3$-Umwandlungspunkt + 100)°C, primäres Abkühlen des warmgewalzten Stahlbleches auf eine Abkühlungsstopptemperatur von 500°C bis 625°C bei einer durchschnittlichen Abkühlgeschwindigkeit von 100°C/s bis 230°C/s, Erlauben eines Abkühlens in Luft des Stahlblechs für 0,5 Sekunden oder mehr, sekundäres Abkühlen des Stahlblechs bei einer durchschnittlichen Abkühlgeschwindigkeit von 100°C/s oder höher, und Aufwickeln des Stahlblechs bei einer Wickeltemperatur von 400°C bis 550°C.

5. Verfahren zur Herstellung eines hochfesten warmgewalzten Stahlblechs mit exzellenter Formbarkeit gemäß Anspruch 4, wobei der Unterschied zwischen der Abkühlungsstopptemperatur des primären Abkühlens und der Wickeltemperatur 100°C oder weniger beträgt.

**Revendications**

1. Tôle d'acier laminée à chaud à haute résistance ayant une excellente aptitude au façonnage, avec une composition constituée de, en masse,

0,04 % à 0,1 % de C, 0,3 % à 1,3 % de Si, 0,8 % à 1,8 % de Mn, 0,03 % ou moins de P, 0,005 % ou moins de S, 0,005 % ou moins de N, 0,005 % à 0,1 % de Al, et au moins un élément sélectionné parmi 0,002 % à 0,029 % de Ti, 0,002 % à 0,029 % de V, et 0,002 % à 0,019 % de Nb,

et optionnellement 0,0002 % à 0,005 % de B et au moins un de 0,0005 % à 0,005 % de Ca et de 0,0005 % à 0,03 % de REM,

le reste étant du Fe et des impuretés fortuites,

la tôle d'acier ayant

une microstructure constituée de ferrite, de bainite et d'autres phases, dans laquelle la fraction de surface de la phase de ferrite, qui est composée d'une phase de ferrite polygonale et d'une phase de ferrite aciculaire, dans toute la structure est 85 % ou plus, la fraction de surface de la phase de bainite dans toute la structure est 10 % ou moins, la fraction de surface des phases autres que les phases de ferrite et de bainite dans toute la structure est 5 % ou moins, et la fraction de surface de la phase de ferrite aciculaire dans toute la phase de ferrite est 30 % à moins de 80 %

une résistance à la traction, TS, de 490 à moins de 590 MPa, et

un rapport d'élargissement de trou, $\lambda$, de 125 % ou plus, mesuré conformément à JFST 1001.

2. Tôle d'acier laminée à chaud à haute résistance ayant une excellente aptitude au façonnage selon la revendication 1, contenant, en masse, au moins un de 0,0005 % à 0,005 % de Ca et de 0,0005 % à 0,03 % de REM.

3. Tôle d'acier laminée à chaud à haute résistance ayant une excellente aptitude au façonnage selon la revendication 1 ou 2, contenant, en masse, 0,0002 % à 0,005 % de B.

4. Procédé de fabrication d'une tôle d'acier laminée à chaud à haute résistance selon les revendications 1 à 3 ayant une excellente aptitude au façonnage, comprenant le laminage à chaud d'une brame d'acier ayant la composition selon l'une quelconque des revendications 1 à 3 à une température finale d'un point de transformation Ar3 à (point de transformation Ar3 + 100)°C, le refroidissement principal de la tôle d'acier laminée à chaud à une température d'arrêt de refroidissement de 500°C à 625°C à une vitesse de refroidissement moyenne de 100°C/s à 230°C/s, l'autorisation pour la tôle d'acier de refroidir à l'air pendant 0,5 seconde ou plus, le refroidissement secondaire de la tôle d'acier à une vitesse moyenne de 100°C/s ou plus, et l'enroulement de la tôle d'acier à une température d'enroulement de 400°C à 550°C.

5. Procédé de fabrication d'une tôle d'acier laminée à chaud à haute résistance ayant une excellente aptitude au façonnage selon la revendication 4, dans lequel la différence entre la température d'arrêt de refroidissement dans le premier refroidissement et la température d'enroulement est 100°C ou moins.

**EP 2 604 716 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 11117039 A
- JP 2009052065 A
- EP 2180070 A1